# EUROPÄISCHE PATENTSCHRIFT

(11) **EP 1 517 592 B1**
(45) Veröffentlichungstag und Bekanntmachung des Hinweises auf die Patenterteilung: **28.09.2016**
(21) Anmeldenummer: 04019087.8
(22) Anmeldetag: 11.08.2004
(51) Int. Cl.: H02M 7/5383

(54) **Schaltungsanordnung zum Erzeugen von Wechselspannung aus einer Gleichspannung**
Circuitry for the generation of an AC voltage from a DC voltage
Circuit pour produire une tension alternative d'une tension continue

(30) Priorität: 18.09.2003 DE 10343275
(43) Veröffentlichungstag der Anmeldung: 23.03.2005
(73) Patentinhaber: OSRAM SYLVANIA Inc., Danvers, MA 01923 (US)
(72) Erfinder: Heckmann, Markus, 81539 München (DE)
(74) Vertreter: Viering, Jentschura & Partner mbB Patent- und Rechtsanwälte

(56) Entgegenhaltungen:
- FR-A- 2 700 426
- US-A- 3 117 289

## Beschreibung

### Technisches Gebiet

Die Erfindung betrifft Schaltungsanordnungen zum Erzeugen von Wechselspannung aus einer Gleichspannung. Es handelt sich dabei insbesondere um selbstschwingende Wechselrichter. Bevorzugtes Anwendungsgebiet derartiger Wechselrichter sind Betriebsgeräte für Gasentladungslampen.

Die erzeugte Wechselspannung bewirkt in einer angeschlossenen Last einen Wechselstrom. Auch die speisende Gleichspannung liefert einen Gleichstrom. Damit betrifft die Erfindung analog zu obiger Aussage auch Schaltungsanordnungen zum Erzeugen von Wechselstrom aus einem Gleichstrom. Ohne Einschränkung der Allgemeinheit werden im folgenden nur noch die Wechselspannung und die Gleichspannung beschrieben.

### Stand der Technik

Als Schaltungsanordnung zum Erzeugen von Wechselspannung aus einer Gleichspannung, im folgenden auch Wechselrichter genannt, sind Halb- und Vollbrückenschaltungen bekannt. Insbesondere zum Betrieb von Gasentladungslampen werden Halbbrückenschaltungen verwendet.

Die Halbbrücke enthält zwei in Serie geschaltete elektronische Schalter, die abwechselnd ein- und ausgeschaltet werden. Die Ansteuerung dieser Schalter erfolgt entweder aus einer Steuerschaltung oder aus einem angeschlossenen Lastkreis. Im letzt genannten Fall erzeugt sich die Halbbrücke die Ansteuerung der elektronischen Schalter über Rückkoppelmittel selbst, weshalb eine derartige Schaltungsanordnung selbstschwingende Halbbrücke genannt wird. Für eine kostengünstige Realisierung eines Wechselrichters wird im Stand der Technik eine selbstschwingende Halbbrücke mit Bipolartransistoren verwendet. Dadurch wird die Steuerschaltung eingespart und der Einsatz kostengünstiger Bipolartransistoren wird ermöglicht.

In der Schrift US 5,563,777 (Miki) werden verschiedene Ausführungsformen selbstschwingender Halbbrücken beschrieben. Als Rückkoppelmittel kommt ein Übertrager zum Einssatz, dessen Primärseite im Lastkreis angeordnet ist und dessen Sekundärseite die Ansteuerung der elektronischen Schalter bereitstellt.

Im allgemeinen besitzt ein elektronischer Schalter zwei Arbeitskontakte und einen Steuerkontakt. Zwischen den Arbeitskontakten kann ein Arbeitswiderstand definiert werden und zwischen einem Arbeitskontakt und dem Steuerkontakt kann ein Steuerwiderstand definiert werden. Bei einem Bipolartransistor in einer Halbbrücke bilden Emitter und Kollektor die Arbeitskontakte und die Basis den Steuerkontakt. Der Steuerwiderstand liegt zwischen Basis und Emitter. Bei einem MOSFET in einer Halbbrücke bilden Source und Drain die Arbeitskontakte und das Gate den Steuerkontakt. Der Steuerwiderstand liegt zwischen Gate und Source.

Die Schrift US 5,563,777 (Miki) zeigt mehrere Ausführungsbeispiele für den Übertrager. Zum einen kann der Übertrager als separater Übertrager ausgelegt sein der lediglich als Rückkoppelmittel dient. Dieser Übertrager kann sättigend und nicht sättigend ausgelegt sein. Zum anderen kann der Übertrager gebildet sein aus einer Induktivität des Lastkreises, auf die die Sekundärwicklungen aufgebracht werden. Die Induktivität des Lastkreises bildet dann die Primärwicklung des Übertragers. Diese Induktivität kann bei Anwendungen zum Betrieb von Gasentladungslampen als so genannte Lampendrossel benutzt werden. In anderen Anwendungen kann sie z. B. benutzt werden, um einen quasiresonanten Betrieb zu ermöglichen. Wie auch beim oben genannten separaten Übertrager kann der Übertrager, der die Induktivität umfasst, sättigend und nicht sättigend ausgeführt werden.

Alle aus diesem Stand der Technik bekannten Ausführungsformen besitzen Sekundärwicklungen, die parallel zum Steuerwiderstand geschaltet sind.

Die Ausführungsformen aus diesem Stand der Technik weisen folgende Nachteile auf:
Ausführungsformen mit nicht sättigendem Übertrager weisen teilweise hohe Schaltverluste auf, weil nicht immer ein spannungsloses Einschalten der elektronischen Schalter gewährleistet ist. Außerdem treten teilweise hohe Ansteuerverluste auf, weil die Basisströme der elektronischen Schalter hohe Werte annehmen können.

Ausführungsformen mit sättigendem Übertrager weisen hohe Verluste des Übertragers aufgrund seiner starken Aussteuerung auf. Zudem sind die Sättigungseigenschaften großen Exemplarstreuungen unterworfen. Dies bedingt ein aufwändiges Selektionsverfahren bei der Auswahl des Übertragers in der Massenfertigung.

Aus FR 2700426 A ist jedoch eine Schaltungsanordnung zum Erzeugen von Wechselspannung bekannt, die eine Serienschaltung des an einem elektronischen Schalter definierten Arbeitswiderstandes mit einer Sekundärwicklung aufweist, wobei die Serienschaltung zwischen einen Gleichspannungseingang und den Wechselspannungsausgang geschaltet ist. Außerdem sind der Steuerwiderstand und die Sekundärwicklung in einer Masche angeordnet. Aus US 3117289 A ist ein Tongenerator bekannt, der auch diese Schaltungsmerkmale aufweist.

### Darstellung der Erfindung

Es ist Aufgabe der vorliegenden Erfindung, eine Schaltungsanordnung zum Erzeugen von Wechselspannung aus einer Gleichspannung bereitzustellen, die kostengünstig und verlustarm ein Selbstschwingen mit Übertrager bewerkstelligt. Als kostengünstig wird eine Lösung auch dann erachtet, wenn sie keine Bauteile benötigt, die hohe Toleranzen mit sich bringen.

Diese Aufgabe wird ausgehend von den Merkmalen des Oberbegriffs des Patentanspruchs 1 durch seine kennzeichnenden Merkmale gelöst. Vorteilhafte Ausführumgsformen sind in den abhängigen Ansprüchen definiert.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: ein Ausführungsbeispiel einer Schaltungsanordnung,
- Figur 2: ein Ausführungsbeispiel in Anlehnung an Figur 1 mit verbesserter Ansteuerung der elektronischen Schalter,
- Figur 3: ein Ausführungsbeispiel in Anlehnung an Figur 1 mit erfindungsgemäß verbesserter Ansteuerung der elektronischen Schalter,

Im folgenden werden Widerstände durch den Buchstaben R, Kondensatoren durch den Buchstaben C, Transistoren durch den Buchstaben T, Dioden durch den Buchstaben D, Verbindungsstellen durch den Buchstaben J jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführungen der Erfindung

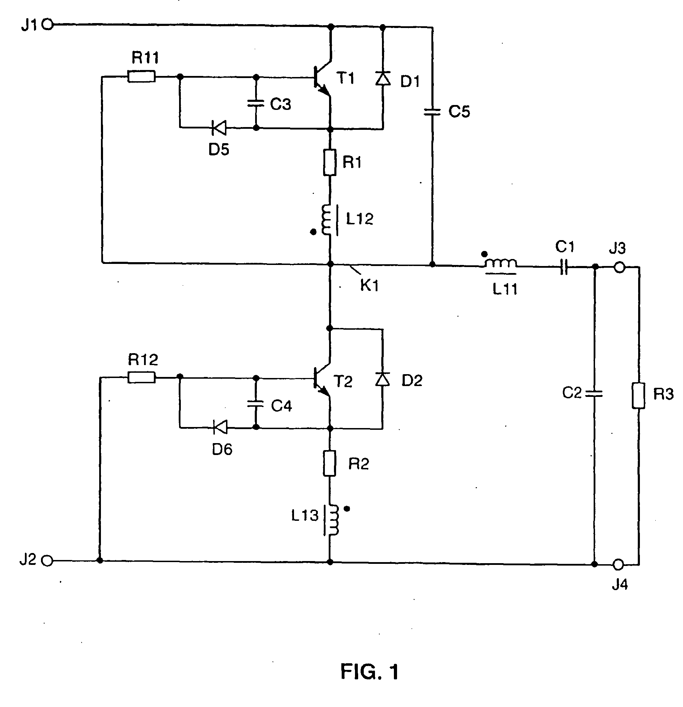

In Figur 1 ist ein Ausführungsbeispiel für einen Wechselrichter dargestellt.

An einem ersten und einem zweiten Gleichspannungseingang J1 und J2 ist eine Gleichspannungsquelle anschließbar. Im vorliegenden Beispiel muss ein Pluspol der Gleichspannungsquelle an J1 und ein Minuspol an J2 angeschlossen werden.

Eine erste Serienanordnung bildet die Serienschaltung aus einem ersten elektronischen Schalter T1, einem Widerstand R1 und einer ersten Sekundärwicklung L12.

Eine zweite Serienanordnung bildet die Serienschaltung aus einem zweiten elektronischen Schalter T2, einem Widerstand R2 und einer zweiten Sekundärwicklung L13.

Die beiden Serienanordnungen sind in Serie geschaltet und zwischen die Gleichspannungseingänge J1 und J2 geschaltet. Damit bilden die beiden Serienanordnungen eine Halbbrücke. Am Verbindungspunkt der beiden Serienanordnungen befindet sich ein Wechselspannungsausgang K1. Durch abwechselndes Einschalten der elektronischen Schalter befindet sich das Potenzial des Wechselspannungsausgangs K1 abwechselnd auf dem Potenzial von J1 und J2.

Aus Kostengründen sind die elektronischen Schalter bevorzugt als NPN Bipolartransistor ausgeführt. Es sind jedoch auch andere elektronischen Schalter wie z. B. PNP Bipolartransistor, MOSFET oder IGBT möglich.

Die Widerstände R1 und R2 dienen jeweils einer Gegenkopplung für T1 und T2 mit allgemein bekannter Wirkung. Sie können auch entfallen und durch einen Kurzschluss ersetzt werden.

Wichtig für die Wirkung der Sekundärwicklungen L12 und L13 ist deren Anordnung bezüglich der Anschlüsse der elektronischen Schalter. Im Ausführungsbeispiel nach Figur 1 ist die Sekundärwicklung L12 über den Widerstand R1 mit dem Emitter von T1 verbunden. Damit ist die Sekundärwicklung L12 in Serie zum Arbeitswiderstand von T1 geschaltet. Diese Serienschaltung aus dem Arbeitswiderstand von T1 und der Sekundärwicklung L12 ist zwischen den Gleichspannungseingang J1 und den Wechselspannungsausgang K1 geschaltet. Weiterhin ist im Ausführungsbeispiel nach Figur 1 ist die Sekundärwicklung L13 über den Widerstand R2 mit dem Emitter von T2 verbunden. Damit ist die Sekundärwicklung L13 in Serie zum Arbeitswiderstand von T2 geschaltet. Diese Serienschaltung aus dem Arbeitswiderstand von T2 und der Sekundärwicklung L13 ist zwischen den Gleichspannungseingang J2 und den Wechselspannungsausgang K1 geschaltet.

Parallel zu den Arbeitswiderständen von T1 und T2 ist jeweils eine allgemein bekannte Freilaufdiode D1 und D2 geschaltet. Diese Dioden können auch im elektronischen Schalter integriert sein oder sie können ganz entfallen.

Zwischen dem Wechselspannungsausgang K1 und dem Gleichspannungseingang J1 ist ein so genannter Snubber-Kondensator C5 geschaltet. Er reduziert die Flankensteilheit der Spannung am Wechselspannungsausgang K1. C5 kann auch mit J2 verbunden sein.

Damit die Ansteuerung der elektronischen Schalter durch die Sekundärwicklungen L12 und L 13 wirksam ist, ist der jeweilige Steuerkontakt so geschaltet, dass der jeweilige Steuerwiderstand und die jeweilige Sekundärwicklung in einer Masche zu liegen kommen. Dazu ist die Basis von T1 über einen Widerstand R11 mit dem Wechselspannungsausgang K1 verbunden und die Basis von T2 über einen Widerstand R12 mit dem Gleichspannungseingang J2 verbunden.

Parallel zu den Steuerwiderständen von T1 und T2 ist jeweils eine Diode D5, D6 und ein Kondensator C3, C4 geschaltet. Die Dioden D5, D6 und die Kondensatoren C3, C4 sind nicht zwingend erforderlich. Sie dienen zur Optimierung der Ansteueerung der ektronischen Schalter T1, T2.

Die Schaltungsanordnung besitzt zwei Lastausgänge J3 und J4 an denen einen Last anschließbar ist. Das Potenzial an J4 kann als Bezugspotenzial aufgefasst werden. J4 ist mit dem Gleichspannungseingang J2 verbunden. Es ist auch möglich J4 mit J1 zu verbinden oder mittels eines Spannungsteilers ein gewünschtes Bezugspotenzial zuschaffen, mit dem J4 verbunden ist.

Zwischen dem Wechselspannungsausgang K1 und den Lastausgängen J3, J4 ist ein Reaktanznetzwerk geschaltet, das die Impedanz am Wechselspannungsausgang K1 zu den Lastausgängen hin transformiert. Es besteht aus der Primärwicklung L11 und den Kondensatoren C1 und C2. Die Primärwicklung L11 und der Kondensator C1 sind in Serie geschaltet und zwischen den Wechselspannungsausgang K1 und den Lastausgang J3 geschaltet. Der Kondensator C2 ist zwischen die Lastausgänge J3 und J4 geschaltet.

Die Primärwicklung L11 ist mit den Sekundärwicklungen L12 und L13 gekoppelt. Somit bilden die Primärwicklung L11 und die Sekundärwicklungen L12 und L13 einen Übertrager. Der jeweilige Wickelsinn der Übertragerwicklungen ist in bekannter Weise durch Punkte gekennzeichnet. Die Primärwicklung L11 ist mit einem ersten Anschluss mit dem Wechselspannungsausgang K1 und mit einem zweiten Anschluss mit dem Lastausgang J3 gekoppelt. Damit wird die Primärwicklung L11 von einem Laststrom durchflossen.

An die Lastausgänge J3 und J4 ist repräsentativ für beliebige Lasten ein Lastwiderstand R3 geschaltet. Das Reaktanznetzwerk kann in beliebiger Weise modifiziert werden. Lediglich die Primärwicklung muss, wie oben beschrieben von einem Laststrom durchflossen sein. Das in Figur 1 dargestellte Reaktanznetzwerk wird bevorzugt für den Fall verwendet, dass für R3 eine oder mehrere Gasentladungslampen angeschlossen werden. In diesem Fall bildet C1 einen Blockkondensator, der verhindert, dass die Spannung zwischen den Lastausgängen J3 und J4 einen Gleichspannungsanteil aufweist. Die Primärwicklung L11 übernimmt in diesem Fall die Aufgabe einer Lampendrossel und bildet zusammen mit C2 einen Serienresonanzkreis.

Es ist auch möglich, dass eine Last über eine weitere Wicklung auf dem Übertrager angekoppelt wird. Dabei kann es sich auch um eine Halogenglühlampe handeln.

Die Halbbrücke kann auch zur Vollbrücke erweitert werden. Die Primärwicklung ist dann in den Brückezweig geschaltet. Außerdem weist der Übertrager dann zwei weitere Sekundärwicklungen zur äquivalenten Ansteuerung der beiden weiteren elektronischen Schalter auf.

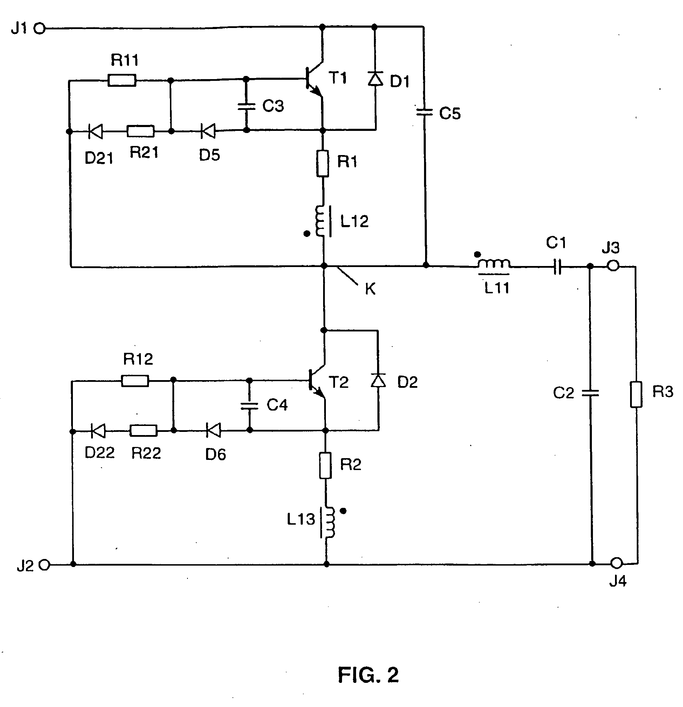

In Figur 2 ist ein weiteres Ausführungsbeispiel für einen Wechselrichter dargestellt. In Figur 2 ist verglichen mit Figur 1 parallel zu den Widerständen R11 und R12 jeweils die Serienschaltung aus einem Widerstand R21 bzw. R22 und einer Diode D21 bzw. D22 geschaltet. Damit wird das Ausschalten der elektronischen Schalter T1 bzw. T2 verbessert.

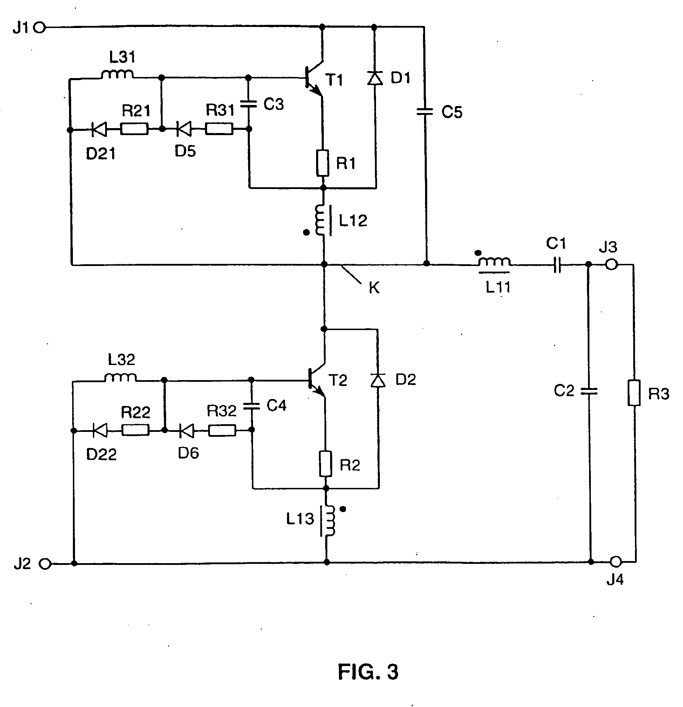

In Figur 3 ist ein Ausführungsbeispiel für einen erfindungsgemäßen Wechselrichter dargestellt. Verglichen mit Figur 2 sind die Widerstände R11 und R22 jeweils durch eine Drossel L31 bzw. L32 ersetzt. Weiterhin ist zu den Dioden D5 und D6 jeweils ein Widerstand R31 bzw. R32 in Serie geschaltet. Die in Figur 3 vorgenommenen Schaltungsänderungen gegenüber Figur 2 stellen eine weitere Verbesserung des Ein- und Ausschaltens von T1 und T2 dar. Hauptsächlich werden dadurch Schaltverluste reduziert und Schaltzeitpunkte bezüglich der Resonanzeigenschaften eines Lastkreises bestehend aus Reaktanznetzwerk und Last optimiert. Bei niedriger Schwingfrequenz des Wechselrichters, z. B. 30 kHz, hat sich herausgestellt, dass sich die Verwendung von Schottky-Dioden für D5 und D6 und das Kurzschliessen der Widerstände R31 und R32 vorteilhaft auf die Verlustleistung des Wechselrichters auswirkt.

Gegenüber Figur 2 weist Figur 3 folgende weitere Änderung auf: Der Kondensator C3 und die Diode D1 sind nicht wie in Figur 2 direkt am Emitter von T1 angeschlossen, sondern am Verbindungspunkt von R1 und der Sekundärwicklung L12 angeschlossen. In entsprechender Weise ist auch der Anschluss des Kondensators C4 und der Diode D2 geändert. Damit fließt der so genannte Freilaufstrom nicht mehr über den Widerstand R1 bzw. R2, wodurch die Effizienz der Schaltungsanordnung verbessert wird. Ausserdem wird durch diese Änderung ein verbessertes Schaltverhalten der elektronischen Schalter T1, T2 erreicht.

Die im folgenden angegebene Dimensionierung von wesentlichen Bauelementen aus Figur 3 ermöglicht den Betrieb von zwei 36 Watt Leuchtstofflampen bei einer Spannung an den Gleichspannungseingängen J1, J2 von 230V:
Übertragerkern: EVD 25
L11: 128 Windungen
L12: 4 Windungen
L 13: 4 Windungen
C2: 12nF
R1, R2: 1Ohm
L31, L32: 1mH
R21, R22: 39 Ohm
R31, R32: 4,7 Ohm

Es ergibt sich eine Schwingfrequenz des Wechselrichters von ca. 50 kHz. Beim Einsatz von Bipolartransistoren ist ein Betrieb im Frequenzbereich zwischen 20 KHz und 100 kHz vorteilhaft.

Bevorzugt wird eine erfindungsgemäße Schaltungsanordnung in einem elektronischen Betriebsgerät zum Betrieb von Leuchtstofflampen eingesetzt. Zusätzlich zur erfindungsgemäßen Schaltungsanordnung enthält ein derartiges Betriebsgerät Mittel zum Bereitstellen einer Gleichspannung aus einer Netzwechselspannung. Diese können auch Mittel zur Reduzierung der Netzstromoberschwingungen enthalten. Weiterhin kann ein derartiges Betriebsgerät Mittel enthalten, die eine Regelung von Betriebsparametern bewirken. Weiterhin kann ein derartiges Betriebsgerät Mittel enthalten, die eine Abschaltung des Betriebsgeräts bei anormalen Betriebszuständen bewirkt. Weiterhin kann ein derartiges Betriebsgerät Mittel enthalten, die zur Unterdrückung von Funkstörungen geeignet sind.

## Patentansprüche

1. Schaltungsanordnung zum Erzeugen von Wechselspannung mit folgenden Merkmalen:
• ein erster und ein zweiter Gleichspannungseingang (J1, J2), an die eine Gleichspannungsquelle anschließbar ist,
• mindestens ein Wechselspannungsausgang (K1),
• mindestens ein Lastausgang (J3, J4) an den eine Last (R3) anschließbar ist,
• zwei elektronische Schalter (T1, T2), mit jeweils zwei Arbeitskontakten und einem Steuerkontakt, wodurch zwischen den Arbeitskontakten ein Arbeitswiderstand definiert wird und zwischen dem Steuerkontakt und einem Arbeitskontakt ein Steuerwiderstand definiert wird,
• ein Arbeitskontakt ist mit einem Gleichspannungseingang (J1, J2) und der andere Arbeitskontakt mit dem Wechselspannungsausgang (K1) gekoppelt,
• ein Übertrager mit einer Primär- (L11) und mindestens einer Sekundärwicklung (L12, L13), wobei ein erster Anschluss der Primärwicklung mit dem Wechselspannungsausgang (K1) und ein zweiter Anschluss der Primärwicklung mit dem Lastausgang (J3) gekoppelt ist,
• die mindestens eine Sekundärwicklung (L12, L13) und der Arbeitswiderstand bilden eine Serienschaltung, die zwischen einen Gleichspannungseingang (J1, J2) und den Wechselspannungsausgang (K1) geschaltet ist,
• der Steuerkontakt ist so geschaltet, dass der Steuerwiderstand und die mindestens eine Sekundärwicklung (L12, L13) in einer Masche zu liegen kommen,
• die sind zwei elektronischen Schalter (T1, T2) in einer Halbbrückenschaltung angeordnet,
• die Arbeitswiderstände beider elektronischer Schalter (T1, T2) sind jeweils in Serie zu einer Sekundärwicklung (L12, L13) geschaltet,
**dadurch gekennzeichnet, dass** die Steuerwiderstände der elektronischen Schalter (T1, T2) und die Sekundärwicklungen (L12, L13) jeweils über eine Drossel (L31, L32) zu einer Masche verschaltet sind.

2. Schaltungsanordnung gemäß Anspruch 1
**dadurch gekennzeichnet, dass** die elektronischen Schalter (T1, T2) als Bipolartransistoren ausgeführt sind.

3. Schaltungsanordnung gemäß Anspruch 1 oder 2
**dadurch gekennzeichnet, dass** parallel zu den Drosseln (L31, L32) jeweils die Serienschaltung einer Diode (D21, D22) und eines Widerstands (R21, R22) geschaltet ist.

4. Betriebsgerät zum Betrieb von Leuchtstofflampen
**dadurch gekennzeichnet, dass** das Betriebsgerät eine Schaltungsanordnung gemäß einem der Ansprüche 1 bis 3 umfasst.

## Claims

1. Circuit arrangement for generating an AC voltage having the following features:
• a first and a second DC voltage input (J1, J2), to which a DC voltage source may be connected,
• at least one AC voltage output (K1),
• at least one load output (J3, J4), to which a load (R3) may be connected,
• two electronic switches (T1, T2) each having two make contacts and a control contact, as a result of which a load resistor is defined between the make contacts, and a control resistor is defined between the control contact and a make contact,
• a make contact is coupled to a DC voltage input (J1, J2), and the other make contact is coupled to the AC voltage output (K1),
• a transformer having a primary (L11) and at least one secondary winding (L12, L13), a first terminal of the primary winding being coupled to the AC voltage output (K1), and a second terminal of the primary winding being coupled to the load output (J3),
• the at least one secondary winding (L12, L13) and the load resistor form a series circuit which is connected between a DC voltage input (J1, J2) and the AC voltage output (K1),
• the control contact is connected such that the control resistor and the at least one secondary winding (L12, L13) are in a mesh,
• the two electronic switches (T1, T2) are arranged in a half-bridge circuit,
• the load resistors of the two electronic switches (T1, T2) are each connected in series with a secondary winding (L12, L13),
**characterized in that** the control resistors of the electronic switches (T1, T2) and the secondary windings (L12, L13) are each connected via an inductor (L31, L32) to form a mesh.

2. The circuit arrangement as claimed in claim 1,
**characterized in that** the electronic switches (T1, T2) are in the form of bipolar transistors.

3. The circuit arrangement as claimed in claim 1 or 2,
**characterized in that** in each case the series circuit comprising a diode (D21, D22) and a resistor (R21, R22) is connected in parallel with the inductors (L31, L32).

4. An operating device for operating fluorescent lamps,
**characterized in that** the operating device comprises a circuit arrangement as claimed in one of claims 1 to 3.

## Revendications

1. Circuit pour produire une tension alternative avec les caractéristiques suivantes :
• une première et une deuxième entrée de tension continue (J1, J2), auxquelles une source de tension continue peut être raccordée,
• au moins une sortie de tension alternative (K1),
• au moins une sortie de charge (J3, J4) à laquelle une charge (R3) peut être raccordée,
• deux commutateurs électroniques (T1, T2) avec respectivement deux contacts de travail et un contact de commande, au moyen desquels une résistance de travail est définie entre les contacts de travail et une résistance de commande est définie entre le contact de commande et un contact de travail,
• un contact de travail est couplé à une entrée de tension continue (J1, J2) et l'autre contact de travail à la sortie de tension alternative (K1),
• une bobine translatrice avec un enroulement primaire (L11) et au moins un enroulement secondaire (L12, L13), une première connexion de l'enroulement primaire étant couplée à la sortie de tension alternative (K1) et une deuxième connexion de l'enroulement primaire à la sortie de charge (J3),
• l'au moins un enroulement secondaire (L12, L13) et la résistance de travail forment un montage en série, qui est connecté entre une entrée de tension continue (J1, J2) et la sortie de tension alternative (K1),
• le contact de commande est connecté de telle manière que la résistance de commande et l'au moins un enroulement secondaire (L12, L13) viennent se placer dans une maille,
• les deux commutateurs électroniques (T1, T2) sont disposés dans un circuit à demi-pont,
• les résistances de travail des deux commutateurs électroniques (T1, T2) sont respectivement connectées en série à un enroulement secondaire (L12, L13),
**caractérisé en ce que** les résistances de commande des commutateurs électroniques (T1, T2) et les enroulements secondaires (L12, L13) sont connectés respectivement à une maille par le biais d'une bobine de réactance (L31, L32).

2. Circuit selon la revendication 1,
**caractérisé en ce que** les commutateurs électroniques (T1, T2) sont exécutés comme des transistors bipolaires.

3. Circuit selon la revendication 1 ou 2,
**caractérisé en ce que** le montage en série d'une diode (D21, D22) et d'une résistance (R21, R22) est respectivement connecté parallèlement aux bobines de réactance (L31, L32).

4. Appareil d'exploitation pour faire fonctionner des lampes fluorescentes,
**caractérisé en ce que** l'appareil d'exploitation comprend un circuit selon les revendications 1 à 3.
